# EUROPEAN PATENT SPECIFICATION

(11) **EP 4 430 102 B1**
(45) Date of publication and mention of the grant of the patent: **25.06.2025**
(21) Application number: 21867926.4
(22) Date of filing: 12.11.2021
(51) Int. Cl.: C08G 59/18, C08L 79/02, C09D 163/00, C08G 73/02, C09J 163/00, C08G 59/50

(54) **POLYOXAZOLINE BASED THERMAL LATENT CURING AGENTS FOR THERMOSET RESINS**
AUF POLYOXAZOLIN BASIERENDE LATENTE WÄRMEHÄRTER FÜR WÄRMEHÄRTENDE HARZE
AGENTS DE DURCISSEMENT LATENT THERMIQUE À BASE DE POLYOXAZOLINE POUR RÉSINES THERMODURCISSABLES

(43) Date of publication of application: 18.09.2024
(73) Proprietor: Sabanci Üniversitesi, 34956 Tuzla/Istanbul (TR)
(72) Inventor: DIZMAN, Bekir, 34956 Tuzla/Istanbul (TR); UNAL, Serkan, 34956 Tuzla/Istanbul (TR); MENCELOGLU, Yusuf Ziya, 34956 Tuzla/Istanbul (TR); YILDIZ, Mehmet, 34956 Tuzla/Istanbul (TR); BEHROOZI KOHLAN, Taha, 34956 Tuzla/Istanbul (TR); ATESPARE, Asu Ece, 34956 Tuzla/Istanbul (TR)
(74) Representative: Genç Ilhan, Oznur
(86) International application number: PCT/TR2021/051197
(87) International publication number: WO 2023/086039

(56) References cited:
- US-A- 4 738 994
- US-A1- 2006 128 835

## Description

### Technical Field of the Invention

The present invention relates to a thermal latent curing agent for use in thermal latent curing of thermoset resin compositions.

### Background of the Invention

The global market value of composite materials is estimated to be about USD 80 billion in 2020 and is expected to grow by the rate of 7.6% (CAGR) by 2027. A higher annual growth rate is expected in the developing countries for the composites market. In the desire of having lightweight materials with enhanced properties, composite materials market is driven by automotive and transportation, wind energy, aerospace, and defense industries. Among different types of composite materials, fiber-reinforced polymer composites are the most used due to exhibition of satisfactory characteristics. Despite the growth of thermoplastic matrix resins, the composite market is dominated by thermoset resins. The biggest obstacle in the development of the composite materials is the high cost of the part manufacturing due to the challenging process and energy insufficiency that rise from the issues explained in the following.

Fiber-reinforced polymer composites (FRPCs) are widely used in a variety of fields including but not limited to automotive and aircraft manufacturing, sport-related equipment, and civil engineering constructions due to the properties arisen from its components- reinforcing fibers and matrix resin. Taking advantage of reinforcing fibers and matrix resin, fabricated materials have excellent performance-weight curves as well as desired chemical and thermal resistance. Examples of reinforcing fibers as strengthening elements include carbon fibers and glass fibers which are embedded in a thermoset or thermoplastic matrix resin. Although the use of thermoplastic matrix resins such as polytetrafluoroethylene as disclosed in US6447918B1, polyvinyl chloride as disclosed in US5344864A, and derivatives of aromatic polyether ketone as disclosed in US5143986A has been increasing in recent years, the FRPC resin market is dominated with different types of thermoset matrix resins including epoxy resins, polyester resins as disclosed in US10723055B2, vinyl resins as disclosed in US7030179B2, phenolic resins as disclosed in US10017637B2 and polyurethane resins as disclosed in US10683403B2.

Epoxy resins constitute the largest part of the thermoset matrix resin market. These resins have been extensively used for a broad range of applications owing to the outstanding performance of parts formed from cured epoxy resins. The parts manufactured by curing epoxy resins exhibit outstanding mechanical properties, excellent chemical and heat resistance, and exceptional adhesive properties.

Conventionally, the curing reaction of epoxy resins has been conducted through mixing of the resin with a curing agent right before usage. In other words, the resin and a curing agent are mixed as the required two-components of resin curing reactions for thermoset part manufacturing. These systems are called two-component epoxy systems. In two-component epoxy systems, epoxy resin and curing agent should be stored separately since they start reacting as soon as they are mixed. Such systems are disclosed in US7008555B2, US7511097B2, and US6787579B2. The instant reaction of curing agents and epoxy resins upon mixing gives rise to a series of technical problems in terms of handling during the part manufacturing process. Being weighted and mixed every time, the integrity and uniformity of the manufactured parts can be affected by human errors. The increase in viscosity of the resin with progressing curing reaction limits the process time of the resin. Thus, it becomes very difficult to prepare large amounts of two-component mixtures or to use automated and continuous processes. The deficiencies mentioned above along with the short pot-life or shelf-life, and the need for frequent batch preparation result in low efficiency of the operation in two-component systems. Most of the curing agents that are widely used in industries initiate the resin curing reaction at ambient temperature immediately after mixing leading to a short pot-life of the mixture.

A series of challenges and problems rise from the short pot-life of the two-component resins resulting in lower processability and efficiency along with higher process costs. During the preparation and mixing, the resin viscosity increases as time passes by. With the increasing viscosity of the resin, the process needs to be completed in a relatively short time which lowers the process feasibility and increases the chance of human errors. Due to the limited available process time resulting from the ongoing curing reaction, the process cannot be fully automated. Thus, only small batches of the mixture must be prepared and used immediately. The frequent batch preparation leads to nonuniform parts and inconsistent properties of the mixture. To lower the rate of the reaction, storage and transportation of the mixed resins are carried out at low temperatures and separately. Being obliged to handle the mixed resins at low temperatures, i.e., in cold-chain, increases the energy cost and decreases the efficiency of the process.

In contrast to the two-component epoxy-based thermoset systems, one-component epoxy systems have been proposed to overcome the inevitable problems mentioned above. One-component epoxy systems are formed through mixing of an epoxy resin and a latent curing agent with the target of initiating the curing reaction at elevated temperatures. Generally, two methods have been proposed to achieve this. The first method is based on latent curing agents that possess crystalline structures and do not dissolve in epoxy resins at low temperatures but melt and get activated at elevated temperatures. Such examples are disclosed in the following patents: US3519576A, US4421897A, US3519576A and US4996286A. The second method is based on using a precursor compound such as a complex or conjugate form of a curing agent. Such systems are disclosed in US3509231A, US4756787A, and US3324198A. However, the formation of complex and conjugate forms of curing agents with other chemicals carries the risk of breakdown before the deliberate triggering.

In the one-component systems, the mixture of the resin and the curing agent is stable at room temperature and the curing reaction is initiated at elevated temperatures or on exposure to shear rate. Mainly, one-component systems are based on mixing a curing agent which has a crystalline form with the resin. Upon exposure to elevated temperatures, the crystalline curing agent melts and becomes active. Even though the one-component systems proposed up to now could overcome some problems related to the two-component systems, some challenges arise from using these systems.

Mostly, the curing agents used in one-component systems initiate the curing reaction when heated to above 180 °C. In contrast to the need of cooling to low temperatures in two-component systems, one-component systems need to be heated to elevated temperatures which imposes high energy cost on the process resulting in low energy efficiency like the two-component systems. In some cases, a catalyst is used along with the curing agent to lower the initiation temperature of the curing reaction. In such systems, despite lowering the required energy for initiating the resin curing, the pot-life of the system is greatly decreased from months to days or hours. The other shortcoming of the proposed one-component systems is related to the unsatisfactory curing behavior including curing time and curing efficiency. Mostly, in the existing one-component systems the required time for achieving the desired cure degree is longer compared to the two-component systems despite the higher temperatures used. Thus, the mixture has to be kept at elevated temperatures for longer times to obtain the desired curing behavior, which is another challenge of the existing one-component systems in terms of energy efficiency.

Mostly, latent curing agents that exhibit good stability at room temperature require high temperature for activation and longer curing time. In contrast, one-component systems that can undergo curing at a lower temperature cannot demonstrate enough stability at room temperature. Dicyandiamide (DICY) is an example of a latent curing agent that is used in one-component epoxy systems and has a 6-month stability at room temperature. However, for curing reaction to start with DICY, a temperature of at least 170° C is required. Some attempts have been reported on using catalysts with DICY to lower the temperature required for initiating the curing reaction. Such examples are disclosed in US. Pat. No 9738750. Even though these attempts were successful in lowering the onset temperature of curing, the shelf life was greatly lowered to days or hours upon inclusion of other catalysts along with DICY.

Further, several attempts have been reported on encapsulation of the room temperature-active curing agents with polymeric materials. In an ideal case, the curing reaction would not occur upon mixing the capsules with epoxy resins at ambient temperature in these systems.

Encapsulation methods have been developed in two ways, covalently bonding the curing agents to the polymers to reduce the reactivity and physical entrapment of curing agents inside polymer chains. As an example of such efforts, in patent PCT/US2011/028938, polychloro-para-xylylene has been used as the polymer matrix to encapsulate 2-heptadecylimidazole. Although the increase in viscosity was less in the case of encapsulated curing agent, the onset temperature of curing was almost the same for both plain and encapsulated forms of the curing agent in this example. US 2006/128835 A1 discloses an amine type capsule type latent curing agent for an epoxy resin. US 4 738 994 A discloses an epoxy-resin emulsion comprising, among other compounds, an amine-based latent curing agent and a polyoxazoline.

### Objects of the Invention

The primary object of the present invention is to overcome the shortcomings in the prior art. Another object of the present invention is to provide a tunable thermal latent curing agent for enhancing processibility, scalability, and efficiency, and lowering energy costs in thermal curing of resins.

A further object of the present invention is to propose a one-component curable resin system with enhanced properties when compared to the background art.

An even further object of the present invention is to propose a method for obtaining such thermal latent curing agent.

### Summary of the Invention

The present invention proposes a thermal latent curing agent, wherein said system comprises one or more polyoxazoline based polymers and one or more curing agents which are: (i) physically entrapped in a matrix of the polyoxazoline based polymer, and/or (ii) covalently bonded to a backbone and/or side chains of the polyoxazoline based polymer irreversibly as a side or terminal group, and/or (iii) covalently bonded to the polyoxazoline based polymer reversibly. The invention also proposes methods for preparation of said thermal latent curing agents. The invention further proposes "one-component" mixtures comprising a thermoset matrix resin and one or more of such thermal latent curing agents and different uses of said mixtures.

### Brief Description of the Figures

The figures, briefly explained here, are intended solely to provide a better understanding of the present invention and not to define the scope of protection or the context in which said scope is to be interpreted in the absence of the description.
Fig.1(a) visually exemplifies synthesis of a polyoxazoline-based homopolymer via a ring opening polymerization (here: cationic ring opening polymerization) of an oxazoline monomer (here: 2-R₁-2-oxazoline monomer).
Fig.1(b) visually exemplifies synthesis of a polyoxazoline-based copolymer via a copolymerization of different oxazoline monomers (here: 2-R₁-2-oxazoline monomer and 2-R₂-2-oxazoline monomer).
Fig.2(a) visually exemplifies synthesis of L-PEI.
Fig.2(b) visually exemplifies synthesis of POZ-PEI.
Fig.2 (c) visually exemplifies synthesis of POZ-PEI from L-PEI.
Fig.3(a) visually exemplifies synthesis of POZ homopolymers via modification of PEI.
Fig.3(b) visually exemplifies synthesis of POZ copolymers via modification of PEI.
Fig.4(a) visually exemplifies synthesis of POZ copolymers having non-oxazoline repeating units from PEI.
Fig.4(b) visually exemplifies synthesis of POZ copolymers having non-oxazoline repeating units from POZ-PEI.
Fig.5(a) visually exemplifies synthesis of POZ-PEI copolymer structures obtained by partial hydrolysis of POZ copolymer.
Fig.5(b) visually exemplifies synthesis of POZ-PEI copolymer structures obtained by modification of PEI.
Fig.6(a) visually exemplifies a post-modification reaction of POZ-PEI backbone to obtain POZ copolymers with covalently-bound curing agents.
Fig.6(b) visually exemplifies a post-modification reaction of PEI backbone to obtain POZ copolymers with covalently-bound curing agents.
Fig.7 visually exemplifies a modification reaction of the functional side group of POZ carrying a terminal group with or without curing capability to obtain POZ copolymers with curing agents.
Fig.8(a), Fig.8(b) and Fig.8(c) visually exemplify protection of the curing agents through a reversible bond formed between POZ-PEI or PEI and the other curing agent.
Fig.9(a) shows imidazole and Fig.9(b) shows poly(2-ethyl-2-oxazoline).
Fig.10(a) shows imidazole and Fig.10(b) shows poly(2-ethyl-2-oxazoline-co-2-propyl-2-oxazoline).

### Detailed Description of the Invention

The present invention is described in detail below, with reference to the respective figures described above. The present invention attempts to provide means for overcoming the challenges mentioned above to obtain a latent curing agent for resin curing using polyoxazoline derivatives along with widely used curing agents.

The present invention proposes polyoxazoline-amine based (or polyoxazoline-based) thermal latent curing agents (TLCs). The TLCs according to the present invention can be used in resin formulations to obtain one-component resins, adhesives, coatings, prepregs, and thermoset composites produced therefrom. Thus, the present invention further proposes resin formulations comprising polyoxazoline-based TLCs. The resin formulations can be in the form of one-component resins or prepregs.

The invention utilizes the innovative aspects of the novel TLCs to both increase the shelf-life and fine-tune the curing temperature of one-component resins and prepregs, especially focusing on epoxy-based resins and prepregs, with a final goal to increase the processability of these systems and energy efficiency upon their use in various manufacturing processes.

The term "latent curing agent" refers to a curing agent, catalyst, or accelerator, which is (i) entrapped in a polyoxazoline based polymer matrix, (ii) covalently bonded to a polyoxazoline based polymer and entrapped in it, (iii) protected and blocked by being covalently bonded to a polyoxazoline based polymer in a reversible fashion.

Hence, the present invention proposes a thermal latent curing agent comprising one or more polyoxazoline based polymers and one or more curing agents which are either:
(i) physically entrapped in a matrix of a polyoxazoline based polymer, and/or
(ii) covalently bonded to the polyoxazoline based polymer irreversibly, and/or
(iii) covalently bonded to the polyoxazoline based polymer reversibly.

The term "entrapment of the curing agent" is the process of confining the curing agent in a tailored polymer matrix physically as in version (i) and version (ii), chemically in version (i), version (ii) and version (iii), or in a combined fashion: both physically and chemically as in version (i) in combination with version (ii) and/or version (iii). The curing agent being "physically entrapped" in the matrix means that the curing agent is contained within the matrix without the need for any chemical bonding to the matrix.

The term "thermoset matrix resins" refers to the resins having functional groups including but not limited to epoxides, isocyanates, cyclic carbonates, aldehydes, etc. This embodiment mainly focuses on epoxy based thermoset matrix resins. In a preferred embodiment, said thermoset matrix resin is an epoxy resin, more preferably it is diglycidyl ether Bisphenol A.

The curing agents (C) can be substances in liquid or solid form, suitable for initiating a resin curing reaction. Preferably, the curing agents can be selected from aliphatic amines, aromatic amines, cycloaliphatic amines, polyamides, polyamines, imidazole derivatives, polymercaptans, anhydrides, phenols, anionic catalysts such as imidazole, cationic catalysts such as boron trifluoride, and tertiary amines.

The invention also proposes a mixture comprising a thermoset matrix resin mixed with one or more thermal latent curing agents according to any embodiment mentioned above.

Said mixture can be used in one-component resin systems, prepregs, composites, adhesives, or coatings.

The invention further proposes a method for preparation of a thermal latent curing agent, wherein the method comprises one or a combination of the following sets of steps:
a. preparation of a solution which includes one or more polyoxazoline based polymers, one or more curing agents, and one or more solvents, then evaporating of said one or more solvents for obtaining a polyoxazoline matrix in which the one or more curing agents are physically entrapped;
b. preparation of a matrix of one or more polyoxazoline based polymers, in which one or more curing agents are covalently bonded to the polyoxazoline based polymer irreversibly;
c. preparation of a matrix of one or more polyoxazoline based polymers, in which one or more curing agents are covalently bonded to the polyoxazoline based polymer reversibly.

The group shown as "I", refers to a part of the initiator utilized in the initiation of the polymerizations. The polymerization initiators can include one or more electrophilic substances which can be selected from alkyl sulfonates (methyl p-toluenesulfonate), alkyl tosylates (methyl p-toluenesulfonate), acids (trifluoromethanesulfonic acid, tosylic acid), alkyl halides (methyl bromide, methyl chloride), strong acids (sulphuric acid, hydrobromic acid), Lewis acids (boron trifluoride, trihalogenobismuthine), oxazolinium salts (bis-2-oxazolinium salt, N-methyl-2-methyl-2-oxazolinium triflate) and macroinitiators (α-methoxy-w-4-toluenesulfonate-poly(ethylene oxide)). The initiator type determines the functionality present in one end of the polymer chain. This functionality can be used for different purposes such as further modification and purification.

'T' refers to a group attached while terminating the polymerization by nucleophilic agents such as good-to-strong and weak-to-fair nucleophiles. T can for instance be good-to-strong nucleophiles such as HO⁻, HS⁻, RS⁻, I⁻, N₃⁻, potassium phthalimide, and secondary and tertiary amines; and weak-to-fair nucleophiles such as water, carboxylates, ammonia, and primary amines.

### The TLC version (i):

The TLC created through physical entrapment of one or more curing agents in a matrix of one or more polyoxazoline polymers (which can be also referred to as polyoxazolines or polyoxazoline based polymers). The polyoxazoline polymers can be selected from:
- homopolymers, random copolymers, alternating copolymers, block copolymers, or gradient copolymers of one or more oxazoline monomers such that the polyoxazoline polymer has a structure of poly(2-R-2-oxazoline) or poly(2-R-co-2-R'-2-oxazoline);
- random copolymers, alternating copolymers, block copolymers, or gradient copolymers including (or possibly, consisting of) at least one oxazoline-based repeating unit along with repeating units carrying groups other than oxazoline-based group;
- random copolymers, alternating copolymers, block copolymers, or gradient copolymers including a plurality of oxazoline and ethyleneimine repeating units referred to as poly(2-R-2-oxazoline-co-ethyleneimine) (abbreviated as POZ-PEI)
or a mixture thereof.

According to one embodiment, said polyoxazoline based polymers are selected from the list comprising poly(2-R-2-oxazoline-co-ethyleneimine) and poly (2-R-co-2-R'-2-oxazoline-co-ethyleneimine).

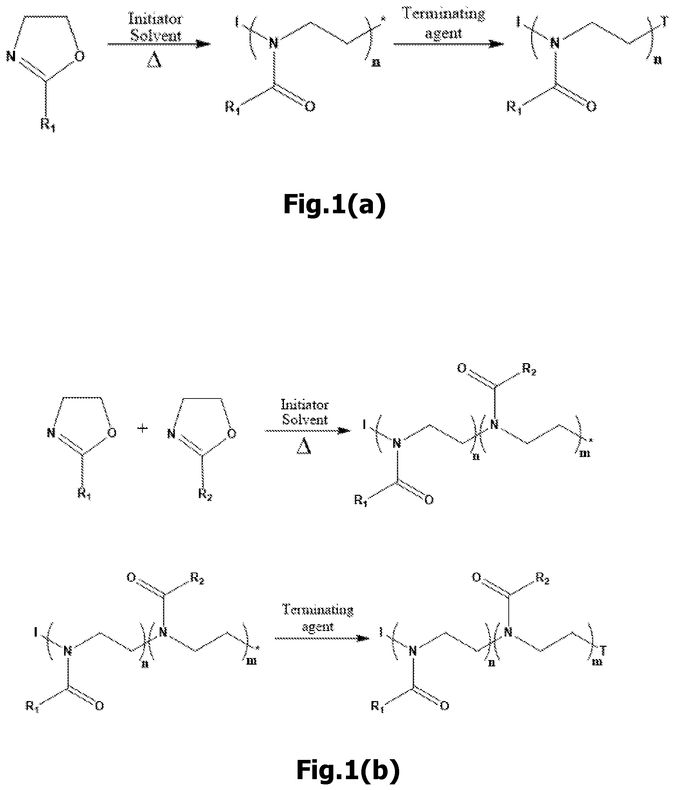

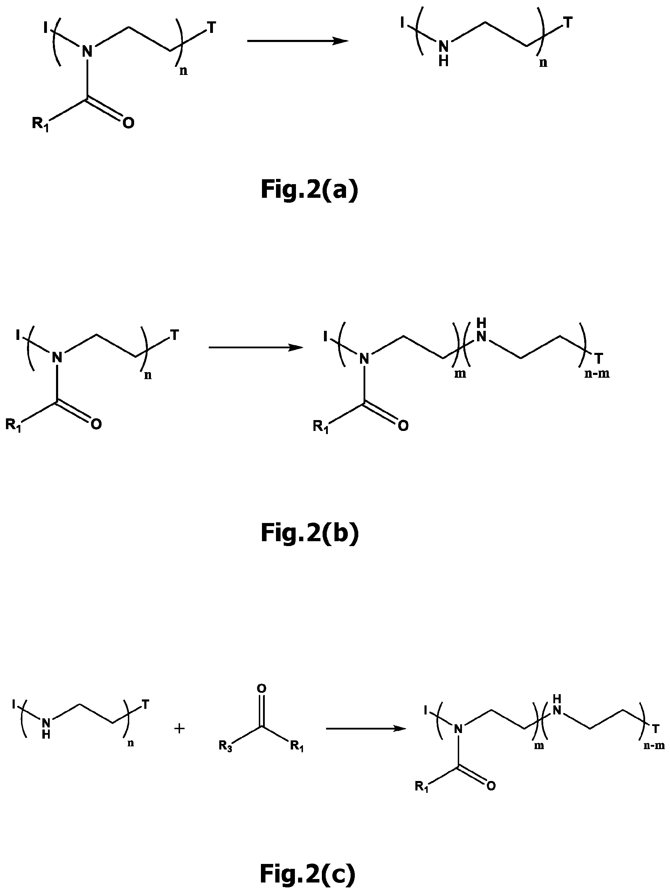

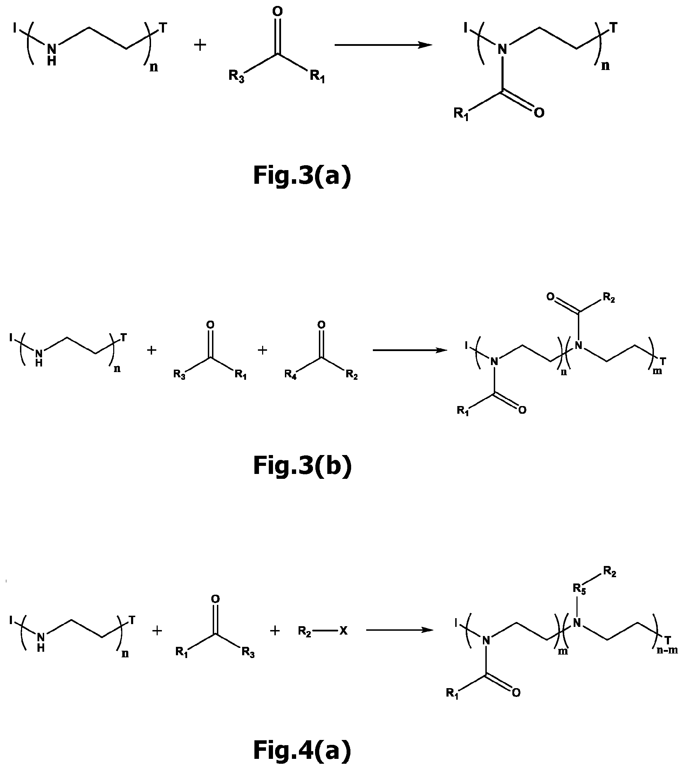

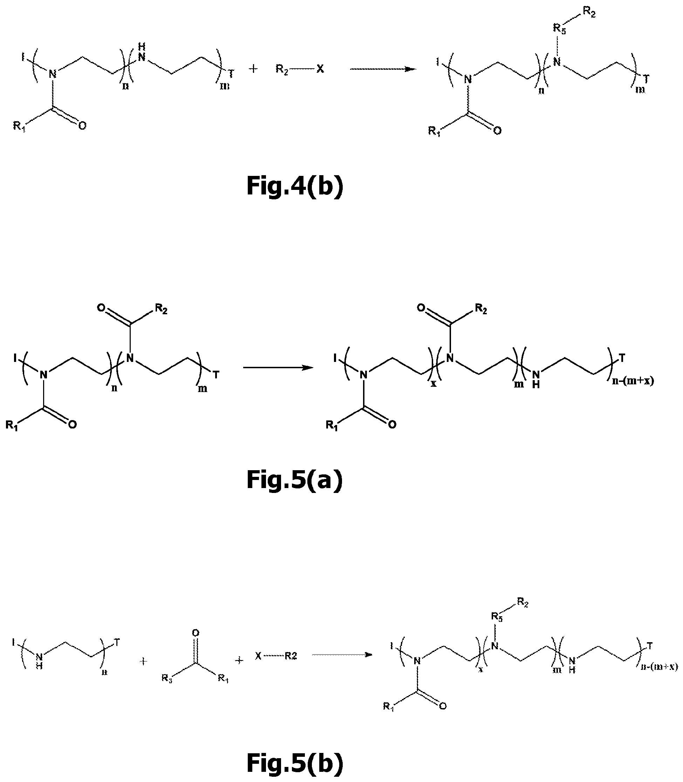

The structures of polymers suitable for use in obtaining the version (i) and the related synthesis methods are visually exemplified in Fig.1 to Fig.5. Fig.1 shows synthesis of (a) homopolymers and (b) copolymers from 2-R₁/R₂-2-oxazoline monomers. Fig.2 shows synthesis of (a) L-PEI, (b) POZ-PEI from POZ homopolymers, and (c) POZ-PEI from L-PEI. Fig.3 shows synthesis of (a) POZ homopolymers and (b) POZ copolymers via modification of PEI. Fig.4 shows synthesis of POZ copolymers from (a) PEI and (b) POZ-PEI. Fig.5 shows POZ-PEI copolymer structures (a) by partial hydrolysis of POZ copolymer and (b) by modification of PEI.

The POZ homopolymers can be prepared via cationic ring opening polymerization of oxazoline monomers as visually exemplified in Fig.1(a), or chemical post-modification of linear polyethyleneimine as visually exemplified in Fig.3(a), whose synthesis through the complete hydrolysis of polyoxazoline is visually exemplified in Fig.2(a). Poly(2-R-2-oxazoline-co-ethyleneimine) is obtained by partial hydrolysis of the polyoxazoline homopolymers as visually exemplified in Fig.2(b) or by partial chemical modification of polyethyleneimine as visually exemplified in Fig.2(c). Copolymers are prepared either by copolymerization of different oxazoline monomers as visually exemplified in Fig.1(b) or chemical post-modification of poly(2-R-2-oxazoline-co-ethyleneimine) or PEI as visually exemplified in Fig.3(b) (only PEI modification is shown).

According to one embodiment, one or more polyoxazoline based polymers mentioned in step (a) of preparation methods is prepared by the following sub-steps:
a1. cationic ring opening polymerization of one or more oxazoline monomers or chemical post-modification of linear polyethyleneimine for obtaining one or more polyoxazoline homopolymers; and/or
a2. partial hydrolysis of the polyoxazoline homopolymers or partial chemical modification of polyethyleneimine for obtaining one or more poly(2-R-2-oxazoline-co-ethyleneimine); and/or
a3. copolymerization of one or more oxazoline monomers or chemical post-modification of poly(2-R-2-oxazoline-co-ethyleneimine) or PEI for obtaining one or more copolymers.

In a further embodiment, one or more terminating agents are used for terminating the polymerization or copolymerization. Said terminating agents are selected from strong nucleophiles, preferably HO⁻, HS⁻, RS⁻, I⁻, N₃⁻, potassium phthalimide, secondary and tertiary amines; and weak nucleophiles such as water, carboxylates, ammonia, and primary amines.

In an embodiment, trifluoromethanesulfonic acid (triflic acid) is the most preferred initiator, which brings hydrogen as the 'I' group to the polymer.

The R₁ and R₂ groups can include the following groups, which are used to tailor the desired structures:
a) Aliphatic groups such as alkyl chains with one to twenty-two carbon atoms including but not limited to methyl, ethyl, n-propyl, butyl, pentyl, heptyl, nonyl, pentadecyl, hexadecyl, heptadecyl, and nonadecyl groups.
b) Branched or cyclic alkyl groups including but not limited to isopropyl, butyl, ethyl pentyl, 3-ethyl-pentyl, ethyl-heptyl, cyclopropyl, cyclobutyl, cyclopentyl, cyclohexyl or adamantyl.
c) Aryl groups including but not limited to phenyl, p-methyl-phenyl, p-methoxy-phenyl, p-chloride-phenyl, p-nitro-phenyl, p-terbutyl phenyl, p-azide phenyl, and cinam phenyl groups.
d) Araliphatic or heterocyclic groups including but not limited to 2-(4-((tert-Butoxycarbonyl) amino) butyl), 2-(β-N-ethylenediphenylamine), 2-(3'-methoxymonoethyleneglycol) propyl, 2-alkylthio, and 2-(perfluoroalkyl) groups.
e) Fluorinated substituents including linear chains and with fluorinated phenyl rings such as monofluorophenyl- (ortho, meta or para position), difluorophenyl-, trifluorophenyl-, tetraflurophenyl- and pentafluorophenyl groups.
f) Unsaturated groups including but not limited to alkenes such as butenyl, isopropenyl, decenyl, or 2-vinyl substituents including 2-isopropenyl-4,4-dimethyl and alkynes such as propynyl, butynyl, and pentynyl groups.
g) Acetals including but not limited to 2-[3-(1,3)-dioxolan-2-ylpropyl] groups.
h) Esters including but not limited to 2-methoxycarbonylethyl and 2-methoxycarbonylpropyl groups.
i) Fatty acid-based unsaturated side chains including but not limited to soybean unsaturated side chains.

The R₃ and R₄ refer to groups which correspond to chemical reagents carrying a functional group for reacting with an amine group, here: with the amine group of the POZ-PEI and PEI. R₃ and R₄ can for instance correspond to -OH, -Cl, or acid anhydrides.

Another method to obtain a POZ-based copolymer for the version (i), which relies on the post modification of PEI and POZ-PEI, is shown in Fig.4.

In Fig.4, X refers to a functional group suitable for reacting with a secondary amine group, here: with the secondary amine group of the POZ-PEI or PEI. X can for instance be selected from isocyanates, epoxides, aldehydes, acid anhydrides, (cyclic) carbonates, and acrylates. R₅ refers to a group resulting from the reaction of X and amines of the POZ-PEI or PEI and will vary depending on the X used in the modification. For instance, if X is an isocyanate group, R₅ ends up being a urea group.

Altering the side groups, R₁ and R₂, greatly affects the properties of the polymeric matrix such as glass transition temperature, melting temperature, and amphiphilicity, which directly influence the entrapment and release of curing agents from the polymer matrix; therefore, overall curing behavior when the overall system is heated up to a certain temperature to initiate the resin curing.

The degrees of polymerization are denoted by "n", "n + m", and "n + m + x" for homopolymers and copolymers, respectively. POZ can be polymerized to any desired "n" or "n + m" based on the targeted properties. In this embodiment, POZ is preferred to have a number average molecular weight of 500-500,000 g.mol⁻¹ (n or n+m being within the range between 5 and 5,000), more preferably 500-50,000 g.mol^{-1,} (n or n+m being within the range between 5 and 500), and even more preferably 500-10,000 g.mol⁻¹ (n or n+m being within the range between 5 and 100).

For copolymers, the n:m ratio is varied as needed either by adjustment of the feeding ratio of 2-oxazoline monomers used in the copolymerization or through various modifications of PEI and POZ-PEI to control the amphiphilicity of the copolymers and curing behavior of the polymeric matrix in terms of entrapment of curing agent and stability of the obtained composition of the thermal latent curing agent and epoxy resin.

POZ-PEI copolymer can be obtained through either controlled partial hydrolysis of POZ or chemical post-modification of a linear polyethyleneimine. The linear polyethyleneimine can be obtained through complete hydrolysis of POZ polymers. Having a flexible design, n:m:x ratio can be adjusted based on desired properties of the TLC or of a latent curing system comprising such TLC.

For the version (i), the poly(2-R-2-oxazoline-co-ethyleneimine) (POZ-PEI) can be obtained as visually exemplified in Fig.5. In Fig.5, R₁, R₂, R₃, R₅, and X refer to the groups mentioned before in regard to homopolymers and copolymers.

In the version (i), the latent curing agents are obtained through a number of methods leading to physical entrapment of the curing agents in the POZ matrix. These methods include solvent evaporation, spray drying, and freeze drying.

The version (i), which includes the POZ-PEI structure with a secondary amine group capable of resin curing, exhibits the latent curing behavior by entrapping the secondary amine groups of the POZ-PEI by the cure-inactive parts of the POZ-PEI. Thus, POZ-PEI can be used as a latent curing agent both with and without a further curing agent entrapped in it. The entrapment of a further curing agent in POZ-PEI and entrapment of the secondary amine groups of the POZ-PEI by the cure-inactive parts of the POZ-PEI can be accomplished by the same methods mentioned above.

In solvent evaporation method, the curing agent and POZ or POZ-PEI are dissolved in one or more solvents (e.g., dichloromethane) suitable for dissolving both the curing agent and the polymer. Then, the solvent is evaporated, preferably under reduced pressure, to obtain the TLCs in a rigid form. In another method, after dissolving both polymer and the curing agent in one or more organic solvent, the solution is emulsified with another solvent in the presence of a surfactant. With evaporation of the organic solvents, the TLCs can be obtained in a rigid form. The TLCs can be then ground and washed with a liquid, which is a non-solvent for the POZ or POZ-PEI.

In spray drying method, the curing agent and the polymer are dissolved in a solvent capable of dissolving both. The solution is then sprayed though a nozzle and dried rapidly. TLCs are thus obtained in the form of microcapsules.

In freeze drying method, the curing agent and the polymer are mixed in a solvent. After freezing the mixture, the solvent is removed under reduced pressure and the TLCs can thus be obtained.

POZ properties such as amphiphilicity, glass transition temperature (T_{g}), crystallinity, and functionality can be modified by utilization of different side chain groups on the polymer structure. Having this flexibility, polymer matrix can be designed considering the used curing agent and the expected final properties for the TLCs. Using different POZ structures along with various curing agents results in obtaining TLCs that demonstrate a range of characteristics such as well-controlled curing temperature and curing time, ambient and low temperature stability (shelf life), and adjustable mechanical properties. The morphological change of the POZ matrix (i.e., matrix of the polyoxazoline based polymer) upon heating leads to the release of the entrapped curing agent at elevated temperatures, which leads to the initiation of a respective resin curing reaction.

### The TLC version (ii):

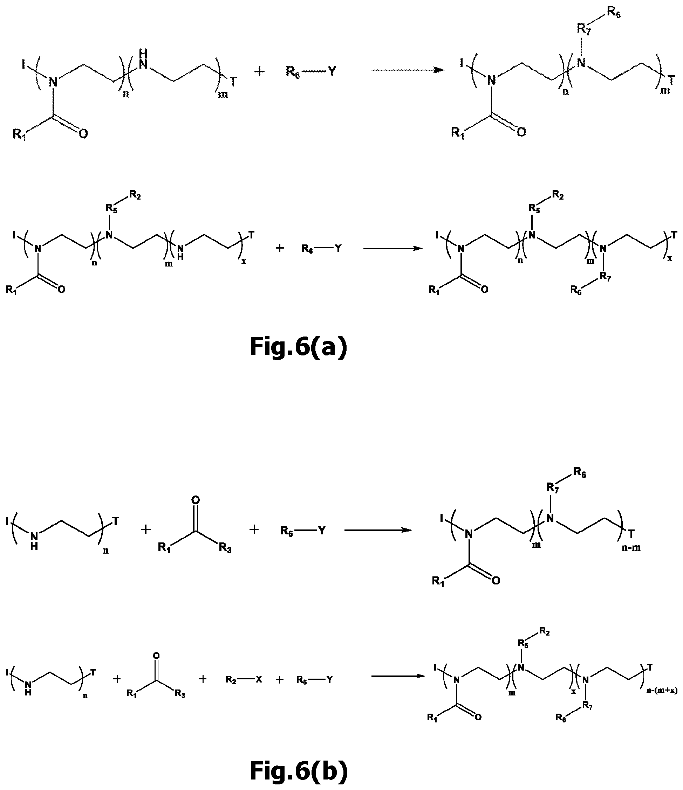

The TLC created in the case where one or more curing agents are covalently bonded to the polyoxazoline based polymer irreversibly; the polymer matrix can be obtained by the post-modification of the POZ-PEI or PEI structure by two methods visually exemplified in Fig.5 and Fig.6.

Said polyoxazoline based polymers can be selected from:
- homopolymers, random copolymers, alternating copolymers, block copolymers, or gradient copolymers of one or more oxazoline monomers such that the polyoxazoline polymer has a structure of poly(2-R-2-oxazoline) or poly(2-R-co-2-R'-2-oxazoline);
- random copolymers, alternating copolymers, block copolymers, or gradient copolymers including (or possibly, consisting of) at least one oxazoline-based repeating unit along with repeating units carrying groups other than oxazoline-based group;
- random copolymers, alternating copolymers, block copolymers, or gradient copolymers including a plurality of oxazoline and ethyleneimine repeating units referred to as poly(2-R-2-oxazoline-co-ethyleneimine) (abbreviated as POZ-PEI)
or a mixture thereof.

In the method variation visually exemplified in Fig.6(a), POZ-PEI is obtained either by partial hydrolysis of POZ or by chemical post-modification of linear PEI. The TLC can be obtained by post-modification of the POZ-PEI with a curing agent, which is covalently attached to the polymer backbone as a side group. R₁, R₂, R₃, R₅, X, I, and T refer to the respective groups mentioned before.

In an embodiment, according to the method for the preparation of a thermal latent curing agent, in which one or more curing agents are covalently bonded to the polyoxazoline based polymer irreversibly as terminal and/or side groups, the thermal latent curing agent is prepared by one or a combination of the following steps:
- reacting poly(2-R-oxazoline-co-ethyleneimine) with one or more compounds which include a carbonyl group and with one or more compounds in the form of R₆-Y;
- reacting polyethyleneimine with one or more compounds which include a carbonyl group, and one or more compounds in the form of R₆-Y, and one or more compounds in the form of R₂-X; wherein
R₆, Y and X are defined as follows:
R₆ refers to an agent that initiates the resin curing reaction either directly or after the deprotection step following the attachment of R₆-Y to the polymer. Thus, R₆ can be selected from tertiary amines and protonated and protected primary and secondary amines. R₆ can be selected from aliphatic amines, aromatic amines, cycloaliphatic amines, heterocyclic amines, and heterocyclic aromatic amines. For instance, R₆ can be 4-dimethylamino butyric acid, 4-(methylamino) butyric acid hydrochloride, N-(tert-butoxycarbonyl)-3-aminopropionic acid, 3-[(tert-butoxycarbonyl)(methyl)amino]propanoic acid, 1H-imidazol-1-ylacetic acid, and 4-imidazoleacetic acid hydrochloride.
Y refers to a group carrying a functional group that can react with a secondary amine group, here: with the secondary amine group of the POZ-PEI. Thus, Y can be selected from carboxylic acids, acyl halides and anhydrides. Y can be for instance selected from succinic acid, terephthalic acid, 4-4'-biphenyldicarboxylic acid; 2-[2,4-di(pentan-2-yl)phenoxy]acetyl chloride; acetic anhydride, maleic anhydride, phthalic anhydride and nadic methyl anhydride.
X is a functional group for reacting with a secondary amine group of a poly(2-R-oxazoline-co-ethyleneimine); preferably selected from epoxides, aldehydes, acid anhydrides, (cyclic) carbonates, and acrylates.

Similar to the version (i) discussed above; n, m, and x determine the degree of polymerization, thus, the molecular weight of the polymer. The latent curing system can be designed based on a set of targeted final properties in terms of curing temperature, curing time, and shelf life. T_{g}, Tₘ, molecular weight, amphiphilicity, curing temperature, curing time, and shelf life can be fine-tuned by varying side chains, curing agents, n, m, and x, and n:m:x ratio.

In the method variation visually exemplified in Fig.6(b), the curing agent is covalently attached to the side groups of the polymer backbone with a stable bond. R₇ refers to a group formed from the reaction of Y and the secondary amine group of POZ-PEI or PEI. R₇ can be for instance an amide group if Y is an acid or acyl halide.

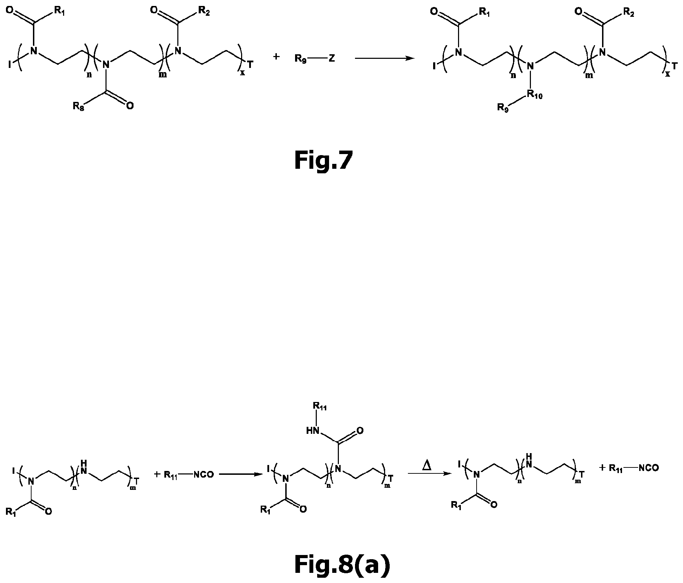

In another embodiment, according to the method for preparation of a thermal latent curing agent, in which one or more curing agents are covalently bonded to the polyoxazoline based polymer irreversibly as terminal and/or side groups, the thermal latent curing agent is prepared by reacting the polyoxazoline based polymer having a functional side group with R₉-Z wherein the side group can be an ester group or a carboxylic acid group, Z is the group capable of reacting with the side chain and R₉ is a group capable of initiating the curing reactions (Fig.7).

Fig.7 shows a modification of POZ side groups with a curing agent. Starting polymer, which is visually exemplified in Fig.7, can be obtained by copolymerization of different 2-oxazoline monomers, or by modification of PEI. R₁, R₂, T, and I refer to the respective groups mentioned above. The n, m, and x determine the degree of polymerization, thus, the molecular weight and composition of the polymers.

R₈ refers to a side group having at least one functional group suitable for undergoing one or more further modifications. R₈-(C=O)- can thus be for instance an ester group or a carboxylic acid group.

R₉ refers to a group that initiates a resin curing reaction. R₉ can for instance be an amine or an imidazole derivative. Z refers to a functional group that can react with R₈ group. An example for R₉-Z is 1-(3-aminopropyl) imidazole.

R₁₀ refers to a group formed after the reaction of R₈ and Z. Thus, R₁₀ can for instance be an amide group in the case where R₈ is an ester and Z is an amine.

The version (ii) is capable of delivering the latent curing agent by two means. First, as described before, the TLC can be obtained via modification of POZ, POZ-PEI, or PEI to obtain a POZ-curing agent conjugate. The TLC benefits from being conjugated to POZ from different aspects. Not only the mobility of the curing agent as a small molecule is hindered by being attached to a macromolecule, but also the curing agent is entrapped within the polymer matrix. Second, the TLC can have the combination of the features of version (i) and version (ii). Using this method, a curing agent can be conjugated with the POZ and another curing agent can be physically entrapped in the polymer matrix by the means described for the version (i) to benefit both from the advantages of covalently bonded and physically entrapped curing agents. As defined before, T refers to a terminal group with or without curing capability.

In the version (ii), properties of the TLC in terms of controlling the curing temperature, curing performance such as curing time, and shelf life (stability in ambient conditions such as temperature and humidity) can be satisfied using the versatility of the system by tailoring the polymer structure. Altering side chains, n, m, and x, n:m:x ratio and the utilized curing agent result in a fine-tuned structure designed for specific purposes including favorable values of T_{g}, Tₘ, molecular weight, composition, water uptake, and amphiphilicity.

### The TLC version (iii):

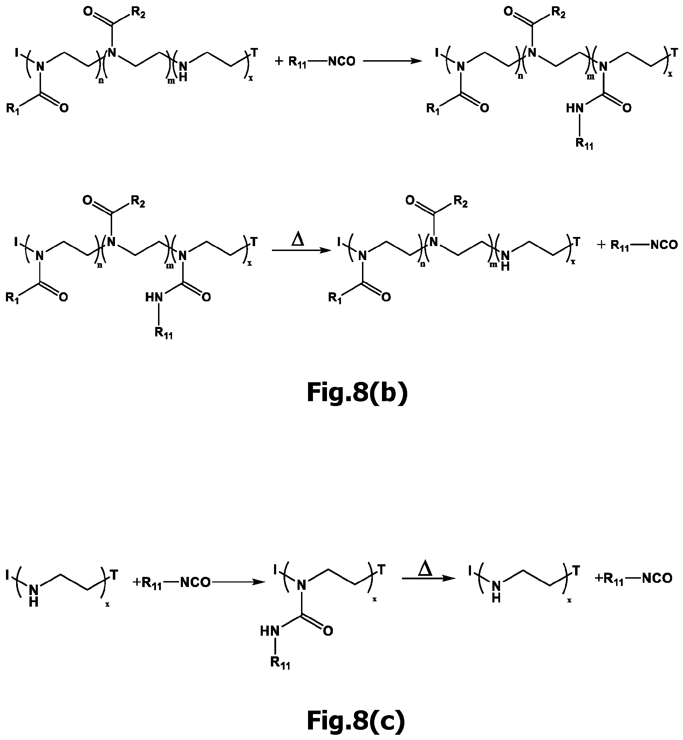

The TLC created in the case where one or more curing agents are covalently bonded to the polyoxazoline based polymer reversibly. In this case, the latent curing agent is obtained via blocking the curing agent by covalently attaching it to the POZ to hinder the resin curing. The curing agent having one functional group capable of the resin curing is attached to PEI or POZ-PEI with a reversible covalent bond through the functional group. Increasing the temperature results in detachment of the curing agent from the polymer, thus, initiating the curing reaction. An example of this system is obtained by the reaction of PEI or POZ-PEI with an isocyanate. The resulting urea bond is reversible and is detached at elevated temperatures resulting in active isocyanate groups and PEI or POZ-PEI, both of which can initiate the curing reaction. The schematic of this system is visually exemplified in Fig.8.

In an embodiment, according to the method for preparation of a thermal latent curing agent, in which one or more curing agents are covalently bonded to the polyoxazoline based polymer reversibly; the thermal latent curing agent being prepared by reacting poly(2-R-oxazoline-co-ethyleneimine) or poly(2-R-co-2-R'-2-oxazoline-co-ethyleneimine) with one or more compounds having isocyanate functional group in the form R₁₁-NCO. Herein, R₁₁ is selected from the group comprising alkyl groups, aromatic groups and cycloalkanes.

Fig.8 shows the protection of a curing agent through a reversible bond with PEI and POZ-PEI. Here, R₁, R₂, I, and T refer to the group mentioned before. Depending on the targeted properties, R₁₁ can be any group connected to NCO including but not limited to alkyl groups, aromatic groups and cycloalkanes. For instance, R₁₁ can be selected from ethyl and isopropyl, phenyl, chlorophenyl, dichlorophenyl, florophenyls, and butyl acetate as 2-isocyanatoethyl methacrylate and cyclohexyl isocyanate can be examples of R₁₁-NCO.

In the version (iii), the active curing agent (i.e., curing agent) is blocked by being bonded to the polymer, thus, neither the amine group of the POZ-PEI nor the curing agent can initiate the curing reaction until the system is heated up to the deblocking temperature. Once the temperature reaches the deblocking temperature, the urea bond is cleaved, thereby releasing the isocyanate reagent and PEI or POZ-PEI in their original forms, both of which act as curing agents. The deblocking temperature can be modified by altering the R₁₁ group. Thus, the curing temperature can be tuned via a purposive selection of R₁₁ in the structure.

### EXAMPLES

### Example 1: Physical entrapment of imidazole curing agent in poly(2-ethyl-2-oxazoline)

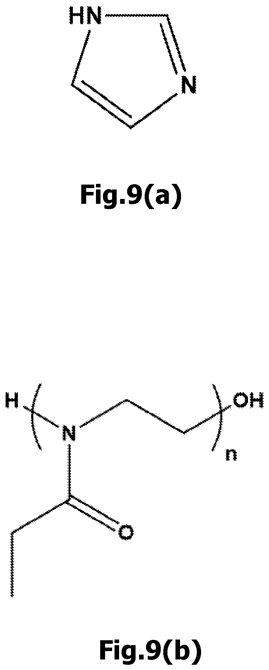

Poly(2-ethyl-2-oxazoline) with a molecular weight of 1,000 g.mol⁻¹ and imidazole were used as the polymer matrix and the curing agent, respectively. Fig.9(a) and Fig.9(b) respectively show imidazole and poly(2-ethyl-2-oxazoline) in which n is 10.

The polymer synthesis was carried out in 4M concentration of 2-ethyl-2-oxazoline monomer in chlorobenzene for 30 minutes at 80°C under N₂ atmosphere. Trifluoromethanesulfonic acid was used as the initiator to leave H as the "I" group. The polymerization was terminated by a solution of KOH in methanol to obtain an -OH group as the terminal group. Obtained polymer (i.e., polyoxazoline based polymer) was purified to a degree of having 1% weight residue at 700°C. The physical entrapment of the curing agent was carried out in a solution of the polymer and imidazole in dichloromethane (DCM) under reflux, e.g., for 2h. The solvent was evaporated under reduced pressure to yield a TLC which corresponds to a poly(2-ethyl-2-oxazoline) matrix with imidazole entrapped therein. Diglycidyl ether Bisphenol A (DGEBA) was used as the epoxy resin. The ratio of imidazole to epoxy resin was kept as 5:100 for both pure imidazole and the TLC. The weight ratios of the polymer to imidazole as curing agent in two different TLCs (referred to as TLC 1 and TLC 2, which are otherwise identical with each other) were 1:1 and 5:1, for comparison of dependency of TLC properties to such weight ratio. The curing behavior of the pure imidazole and the TLCs with different polymer to curing agent weight ratios are provided in Table 1.

**Table 1. Comparison of the curing behaviors of pure imidazole and TLCs**

| | **Pure Imidazole** | **TLC 1 (weight ratio is 1:1)** | **TLC 2 (weight ratio 5:1)** |
|---|---|---|---|
| **Onset Temperature (°C)** | 78.68 | 93.90 | 110.49 |
| **Peak Temperature (°C)** | 94.00 | 124.95 | 129.71 |
| **Enthalpy (J/g)** | 199.89 | 424.89 | 282.47 |

### Example 2: Physical entrapment of imidazole curing agent in poly[(2-ethyl-2-oxazoline)-co-(2-propyl-2-oxazoline)]

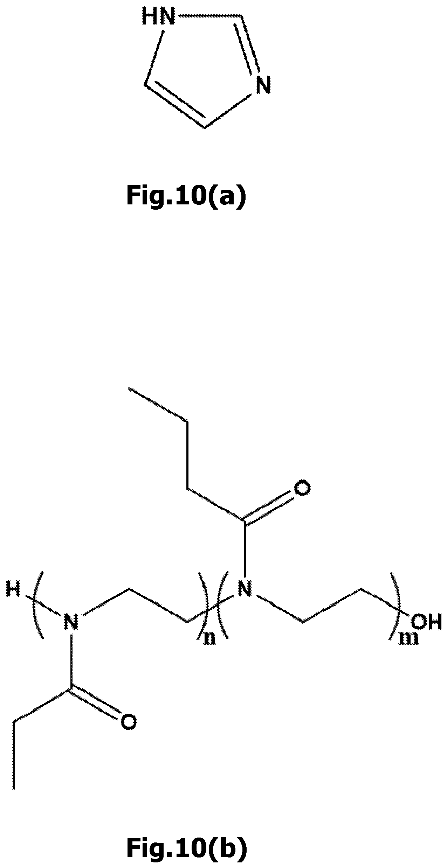

Poly[(2-ethyl-2-oxazoline)-co-(2-propyl-2-oxazoline)] with a molecular weight of 1,000 g.mol⁻¹ and imidazole were used as the polymer matrix and the curing agent, respectively. Fig.10(a) and Fig.10(b) respectively show imidazole and poly[(2-ethyl-2-oxazoline)-co-(2-propyl-2-oxazoline)] in which n + m is 10 and n:m is 25:75.

The polymer synthesis was carried out in 4M concentration of 2-ethyl-2-oxazoline and 2-propyl-2-oxazoline monomers in chlorobenzene for 30 minutes at 80°C under N₂ atmosphere. Trifluoromethanesulfonic acid was used as the initiator to leave H as the "I" group. The polymerization was terminated by a solution of KOH in methanol to obtain an -OH group as the terminal group. Obtained polymer (i.e., polyoxazoline based polymer) was purified to a degree of having 1% weight residue at 700°C. The physical entrapment of the curing agent was carried out in a solution of the polymer and imidazole in dichloromethane (DCM) under reflux, e.g., for 2h. The solvent was evaporated under reduced pressure to yield a TLC which corresponds to a poly[(2-ethyl-2-oxazoline)-co-(2-propyl-2-oxazoline)] matrix with imidazole entrapped therein. Diglycidyl ether Bisphenol A (DGEBA) was used as the epoxy resin. The ratio of imidazole to epoxy resin was kept as 5:100 for both pure imidazole and the TLC. The weight ratios of the polymer to imidazole as curing agent in two different TLCs (referred to as TLC 3 and TLC 4, which are otherwise identical with each other) was 5:1 and 1:1, for comparison of dependency of TLC properties to such weight ratio. The curing behavior of the pure imidazole and the TLCs with different polymer to curing agent weight ratios are provided in Table 2.

**Table 2. Comparison of the curing behaviors of pure imidazole and TLCs**

| | **Pure Imidazole** | **TLC 3 (weight ratio is 1:1)** | **TLC 4 (weight ratio 5:1)** |
|---|---|---|---|
| **Onset Temperature (°C)** | 78.68 | 92.14 | 105.27 |
| **Peak Temperature (°C)** | 94.00 | 123.17 | 129.98 |
| **Enthalpy (J/g)** | 199.99 | 481.99 | 493.14 |

Main advantages achievable in relation with the present invention can be discussed as follows:
In this invention, a thermal latent curing agent based on polyoxazolines is presented to be used in resin curing systems to overcome the problems related to two-component systems and shortcomings of the existing one-component systems in terms of process ease, scalability, and efficiency along with addressing the energy cost and inefficiency.

In contrast to the one-component systems obtained from crystalline curing agents, which require elevated temperatures above 170 °C to initiate the curing, the proposed latent curing agent is based on retardation of the widely used curing agents that are capable of curing at low temperatures, thus, the need for curing at relatively high temperatures is eliminated.

Contrary to the previously proposed two-component systems, the present invention maintains the curing performance of the curing agent and extends the relatively short pot-life of the two-component mixtures to a substantially long pot-life i.e., days to months, to increase the time required for processing. This behavior increases the process efficiency and ease.

Unlike the other proposed systems, this invention is not limited to one curing agent or one thermoset resin. It provides a platform that can be used with a variety of curing agents and different types of thermoset resins to obtain a resin/thermal latent curing agent system owing to the tunable properties of the diversely designable POZ based polymer matrix. Thus, depending on the desired curing performance and process conditions, the POZ is designed to provide latency with the used curing agent.

Compared to the existing inventions, hereby, the latency is provided by three systems including physical entrapment, chemical bonding (used alone or in conjugation with physical entrapment), and blocked polyoxazoline-based curing agents that are reversibly deblocked to create active curing agents at high temperatures. The variety of choices for obtaining the latent curing agent provide tunability and flexibility in designing the system per need.

In contrast to other proposed polymer matrices for latent curing agents, the controllability of the POZ properties provides the ability to fine-tune the system. The diversity of choices for the initiator, side chains, and the terminating group makes bonding and entrapment of different curing agents in POZ possible. With tailoring of these groups, the characteristics of the polymer matrix and the latent curing agent are defined. The polymer matrix is designed in a way to exhibit the favored interactions with the curing agent and the resin based on the characteristics of the used curing agent and the resin such as curing temperature, hydrophilicity/hydrophobicity, and its functional groups. Aside from being bonded to the polymer structure, these interactions can happen in many ways including hydrogen bonding, proton donation, Van der waals forces, etc. When conjugating a curing agent to POZ, different sites of the polymer chain can be used to take advantage of differing mobilities of the sites. Moreover, the controllable cationic ring opening polymerization of the poly(2-oxazolines) results in fine tuning of the molecular weight values and polydispersity values as influential factors in determining the polymer properties. Furthermore, designing the polymer matrix with different groups results in optimizing the T_{g}, Tₘ, mechanical properties, water uptake, and interaction abilities, etc. which affect the activation conditions of the curing agent.

The flexibility of the POZ structure in terms of ability to carry a wide range of functional groups such as initiators, side groups, and terminating agents provides compatibility with different process conditions in synthesizing the latent curing agent such as polymerization conditions, required scale of synthesis, modification methods, entrapment techniques, etc.

Moreover, the latent curing agent is designed to satisfy the required process conditions such as ambient temperature and humidity and expected curing performance. Having a long pot-life eliminates the need for separate and cold-chain storing and handling of the resin and the curing agent. Thus, after mixing the resin and the latent curing agent, storage and transportation are carried out at the demanded ambient conditions. Moreover, the stability at room temperature eliminates the need for preparation of non-automated small batches and the one-component system can be prepared in large scale using an automated process. This feature ensures the uniformity of the produced parts and prepregs in terms of desired properties. Thus, the energy efficiency of the process is greatly increased. In terms of the curing performance, since the curing agents widely used in industries can become latent curing agents using this invention, the same curing behavior such as curing time is achieved.

The present invention can be applied in the technical fields of composites, adhesives, and coatings. The products will be used in the preparation of prepregs and one-component epoxy resins. The companies working in the area of composites, coatings, and chemical manufacturing sectors may be interested in commercial development of this invention. Currently, there are two-component systems that are being utilized in the industry, however, these systems have some serious drawbacks as described in detail in the patent description section above. The present invention offers a platform technology expandable to large number of applications. This is also provided in more detail in the patent description section above.

The invention will increase the energy efficiency, lower the cost, increase the efficiency and easiness of the processes in the relevant applications. The products will provide thermal latency to one-component epoxy resins and prepregs, i.e., they will provide longer shelf-life and controllable/tailored curing temperatures.

## Claims

1. A thermal latent curing agent comprising one or more polyoxazoline based polymers and one or more curing agents, wherein the curing agents are:
(i) physically entrapped in a matrix of the polyoxazoline based polymer, and/or
(ii) covalently bonded to the polyoxazoline based polymer irreversibly as a side and/or terminal group, and/or
(iii)covalently bonded to the polyoxazoline based polymer reversibly.

2. Thermal latent curing agent according to claim 1, wherein one or more curing agents are selected from the list consisting of aliphatic amines, aromatic amines, cycloaliphatic amines, polyamides, polyamines, imidazole derivatives, polymercaptans, anhydrides, phenols, anionic catalysts which preferably comprises imidazole, tertiary amines and cationic catalysts which preferably comprises boron trifluoride.

3. Thermal latent curing agent according to any of claims 1 or 2, wherein said one or more curing agents are physically entrapped in the matrix of the polyoxazoline based polymers and said polyoxazoline based polymers are selected from the list comprising:
- homopolymers, random copolymers, alternating copolymers, block copolymers, and gradient copolymers of one or more oxazoline monomers;
- random copolymers, alternating copolymers, block copolymers, and gradient copolymers including at least one oxazoline-based repeating unit along with repeating units carrying groups other than said oxazoline-based repeating unit;
- random copolymers, alternating copolymers, block copolymers, and gradient copolymers including a plurality of poly(2-R-oxazoline-co-ethyleneimine) repeating units;
or a mixture thereof.

4. Thermal latent curing agent according to any of claims 1 or 2, wherein said one or more curing agents are covalently bonded to the polyoxazoline based polymers reversibly and/or irreversibly as terminal and/or side chain where the polyoxazoline based polymer is selected from:
- homopolymers, random copolymers, alternating copolymers, block copolymers, and gradient copolymers of one or more oxazoline monomers;
- random copolymers, alternating copolymers, block copolymers, and gradient copolymers including at least one oxazoline-based repeating unit along with repeating units carrying groups other than said oxazoline-based repeating unit;
- random copolymers, alternating copolymers, block copolymers, and gradient copolymers including a plurality of poly(2-R-oxazoline-co-ethyleneimine) repeating units;
or a mixture thereof.

5. A mixture comprising a thermoset matrix resin mixed with one or more thermal latent curing agents according to any of claims 1 to 4.

6. The mixture according to claim 5, wherein the thermoset matrix resin is a resin that includes one or more functional groups selected from epoxides, isocyanates, cyclic carbonates, and aldehydes.

7. The mixture according to any of claims 5 or 6, wherein the thermoset matrix resin is an epoxy resin, preferably diglycidyl ether Bisphenol A.

8. A one-component resin system comprising the mixture according to any of claims 5 to 7.

9. A method for preparation of a thermal latent curing agent, wherein the method comprises one or a combination of the following steps:
a. preparation of a solution which includes one or more polyoxazoline based polymers, one or more curing agents, and one or more solvents, then evaporating of said one or more solvents for obtaining a polyoxazoline matrix in which the one or more curing agents are physically entrapped;
b. preparation of a matrix of one or more polyoxazoline based polymers, in which one or more curing agents are covalently bonded to the polyoxazoline based polymer irreversibly; or
c. preparation of a matrix of one or more polyoxazoline based polymers, in which one or more curing agents are covalently bonded to the polyoxazoline based polymer reversibly.

10. The method according to claim 9, wherein one or more polyoxazoline based polymers mentioned in step (a) is prepared by the following sub-steps:
a1. cationic ring opening polymerization of one or more oxazoline monomers or chemical post-modification of linear polyethyleneimine for obtaining one or more polyoxazoline homopolymers; and/or
a2. partial hydrolysis of the polyoxazoline homopolymers or partial chemical modification of polyethyleneimine for obtaining one or more poly(2-oxazoline-co-ethyleneimine); and/or
a3. copolymerization of one or more oxazoline monomers or chemical post-modification of poly(2-R-oxazoline-co-ethyleneimine) for obtaining one or more copolymers.

11. The method according to claim 10, wherein one or more initiators are used for initiating the polymerization or copolymerization, said initiators being selected from alkyl sulfonates, alkyl tosylates, acids, alkyl halides, strong acids, Lewis acids, oxazolinium salts and macroinitiators.

12. The method according to claim 11, wherein said initiators are selected from methyl p-toluenesulfonate, methyl p-toluenesulfonate, trifluoromethanesulfonic acid, tosylic acid, methyl bromide, methyl chloride, sulphuric acid, hydrobromic acid, boron trifluoride, trihalogenobismuthine, bis-2-oxazolinium salt, N-methyl-2-methyl-2-oxazolinium triflate and α-methoxy-w-4-toluenesulfonate-poly(ethylene oxide) and more preferably said initiator is triflic acid.

13. The method according to any of claims 10 to 12, wherein one or more terminating agents are used for terminating the polymerization or copolymerization, said terminating agents being selected from strong nucleophiles, preferably HO⁻, HS⁻, RS⁻, I⁻, N₃⁻, potassium phthalimide, secondary and tertiary amines; and weak -to-fair nucleophiles such as water, carboxylates, ammonia, and primary amines.

14. The method according to any of claims 9 to 13, wherein one or more curing agents are covalently bonded to the polyoxazoline based polymer irreversibly as terminal and/or side groups; the thermal latent curing agent being prepared by one or a combination of the following steps:
- reacting poly(2-R-oxazoline-co-ethyleneimine) with one or more compounds which include a carbonyl group and with one or more compounds in the form of R₆-Y;
- reacting polyethyleneimine with one or more compounds which include a carbonyl group, and one or more compounds in the form of R₆-Y, and one or more compounds in the form of R₂-X; wherein
R₆ refers to an agent that initiates the resin curing reaction either directly or after the deprotection step following the attachment of R₆-Y to the polymer, wherein R₆ is selected from tertiary amines and protonated and protected primary and secondary amines, aliphatic amines, aromatic amines, cycloaliphatic amines, and heterocyclic amines, preferably R6 is selected from 4-dimethylamino butyric acid, 4-(methylamino) butyric acid hydrochloride, N-(tert-butoxycarbonyl)-3-aminopropionic acid, 3-[(tert-butoxycarbonyl)(methyl)amino]propanoic acid, 1H-imidazol-1-ylacetic acid, and 4-imidazoleacetic acid hydrochloride.
Y refers to a group carrying a functional group that can react with a secondary amine group, here with the secondary amine group of the POZ-PEI, wherein Y is selected from carboxylic acids, acyl halides and anhydrides, preferably Y is selected from succinic acid, terephthalic acid, 4-4'-biphenyldicarboxylic acid; 2-[2,4-di(pentan-2-yl)phenoxy]acetyl chloride; acetic anhydride, maleic anhydride, phthalic anhydride and nadic methyl anhydride.
X is a functional group for reacting with a secondary amine group of a poly(2-R-oxazoline-co-ethyleneimine); preferably selected from epoxides, aldehydes, acid anhydrides, (cyclic) carbonates, and acrylates.

15. The method according to any of claims 9 to 13, wherein one or more curing agents are covalently bonded to the polyoxazoline based polymer irreversibly as terminal and/or side groups; the thermal latent curing agent being prepared by reacting the polyoxazoline based polymer having a functional side group with R₉-Z wherein the side group can be an ester group or a carboxylic acid group, Z is the group capable of reacting with the side chain and R₉ is a group capable of initiating the curing reactions.

16. The method according to any of claims 9 to 13, wherein one or more curing agents are covalently bonded to the polyoxazoline based polymer reversibly; the thermal latent curing agent being prepared by reacting poly(2-R-oxazoline-co-ethyleneimine) or poly(2-R-co-2-R'-2-oxazoline-co-ethyleneimine) with one or more compounds having isocyanate functional group in the form R₁₁-NCO wherein R₁₁ is selected from the group comprising alkyl groups, aromatic groups and cycloalkanes.

## Patentansprüche

1. Thermisch latentes Härtungsmittel, das ein oder mehrere Polymere auf Polyoxazolinbasis und ein oder mehrere Härtungsmittel umfasst, wobei die Härtungsmittel sind:
(i) physikalisch in einer Matrix des Polymers auf Polyoxazolinbasis eingeschlossen ist, und/oder
(ii) kovalent an das Polymer auf Polyoxazolinbasis irreversibel als Seiten- und/oder Endgruppe gebunden ist, und/oder
(iii) kovalent an das Polymer auf Polyoxazolinbasis reversibel gebunden ist.

2. Thermisch latentes Härtungsmittel nach Anspruch 1, wobei ein oder mehrere Härtungsmittel ausgewählt sind aus der Liste bestehend aus aliphatischen Aminen, aromatischen Aminen, cycloaliphatischen Aminen, Polyamiden, Polyaminen, Imidazolderivaten, Polymercaptanen, Anhydriden, Phenolen, anionischen Katalysatoren, die vorzugsweise Imidazol umfassen, tertiären Aminen und kationischen Katalysatoren, die vorzugsweise Bortrifluorid umfassen.

3. Thermisch latentes Härtungsmittel nach einem der Ansprüche 1 oder 2, wobei das eine oder die mehreren Härtungsmittel physikalisch in der Matrix der Polymere auf Polyoxazolinbasis eingeschlossen sind und die Polymere auf Polyoxazolinbasis aus der Liste ausgewählt sind, die umfasst:
- Homopolymere, statistische Copolymere, alternierende Copolymere, Blockcopolymere und Gradientencopolymere aus einem oder mehreren Oxazolinmonomeren;
- Zufallscopolymere, alternierende Copolymere, Blockcopolymere und Gradientencopolymere, die mindestens eine sich wiederholende Einheit auf Oxazolinbasis zusammen mit sich wiederholenden Einheiten enthalten, die andere Gruppen als die genannte sich wiederholende Einheit auf Oxazolinbasis tragen;
- Zufallscopolymere, alternierende Copolymere, Blockcopolymere und Gradientencopolymere mit einer Vielzahl von Poly(2-R-oxazolin-co-ethylenimin)-Wiederholungseinheiten;
oder eine Mischung daraus.

4. Thermisch latenter Härter nach einem der Ansprüche 1 oder 2, wobei der eine oder die mehreren Härter reversibel und/oder irreversibel als End- und/oder Seitenkette an die Polymere auf Polyoxazolinbasis kovalent gebunden sind, wobei das Polymer auf Polyoxazolinbasis ausgewählt ist aus:
- Homopolymere, statistische Copolymere, alternierende Copolymere, Blockcopolymere und Gradientencopolymere aus einem oder mehreren Oxazolinmonomeren;
- Zufallscopolymere, alternierende Copolymere, Blockcopolymere und Gradientencopolymere, die mindestens eine sich wiederholende Einheit auf Oxazolinbasis zusammen mit sich wiederholenden Einheiten enthalten, die andere Gruppen als die genannte sich wiederholende Einheit auf Oxazolinbasis tragen;
- Zufallscopolymere, alternierende Copolymere, Blockcopolymere und Gradientencopolymere mit einer Vielzahl von Poly(2-R-oxazolin-co-ethylenimin)-Wiederholungseinheiten;
oder eine Mischung daraus.

5. Gemisch, das ein duroplastisches Matrixharz im Gemisch mit einem oder mehreren thermisch latent härtenden Mitteln nach einem der Ansprüche 1 bis 4 enthält.

6. Gemisch nach Anspruch 5, wobei das duroplastische Matrixharz ein Harz ist, das eine oder mehrere funktionelle Gruppen enthält, die aus Epoxiden, Isocyanaten, cyclischen Carbonaten und Aldehyden ausgewählt sind.

7. Gemisch nach einem der Ansprüche 5 oder 6, wobei das duroplastische Matrixharz ein Epoxidharz ist, vorzugsweise Diglycidylether Bisphenol A.

8. Einkomponentiges Harzsystem, das die Mischung nach einem der Ansprüche 5 bis 7 enthält.

9. Verfahren zur Herstellung eines thermisch latenten Härtungsmittels, wobei das Verfahren einen oder eine Kombination der folgenden Schritte umfasst:
a. Herstellung einer Lösung, die ein oder mehrere Polymere auf Polyoxazolinbasis, ein oder mehrere Härtungsmittel und ein oder mehrere Lösungsmittel enthält, dann Verdampfen des einen oder der mehreren Lösungsmittel, um eine Polyoxazolinmatrix zu erhalten, in der das eine oder die mehreren Härtungsmittel physikalisch eingeschlossen sind;
b. Herstellung einer Matrix aus einem oder mehreren Polymeren auf Polyoxazolinbasis , in der ein oder mehrere Härtungsmittel kovalent und irreversibel an das Polymer auf Polyoxazolinbasis gebunden sind; oder
c. Herstellung einer Matrix aus einem oder mehreren Polymeren auf Polyoxazolinbasis, bei der ein oder mehrere Härter reversibel kovalent an das Polymer auf Polyoxazolinbasis gebunden sind.

10. Verfahren nach Anspruch 9, wobei ein oder mehrere der in Schritt (a) genannten Polymere auf Polyoxazolinbasis durch die folgenden Teilschritte hergestellt werden:
a1. kationische Ringöffnungspolymerisation eines oder mehrerer Oxazolinmonomere oder chemische Nachmodifizierung von linearem Polyethylenimin zur Gewinnung eines oder mehrerer Polyoxazolinhomopolymere; und/oder
a2. partielle Hydrolyse der Polyoxazolin-Homopolymere oder partielle chemische Modifikation von Polyethylenimin zur Gewinnung eines oder mehrerer Poly(2-oxazolin-co-ethylenimin); und/oder
a3. Copolymerisation von einem oder mehreren Oxazolinmonomeren oder chemische Nachmodifizierung von Poly(2-R-oxazolin-co-ethylenimin) zur Gewinnung eines oder mehrerer Copolymere.

11. Verfahren nach Anspruch 10, wobei ein oder mehrere Initiatoren zum Starten der Polymerisation oder Copolymerisation verwendet werden, wobei die Initiatoren aus Alkylsulfonaten, Alkyltosylaten, Säuren, Alkylhalogeniden, starken Säuren, Lewis-Säuren, Oxazoliniumsalzen und Makroinitiatoren ausgewählt sind.

12. Verfahren nach Anspruch 11, wobei die Initiatoren ausgewählt sind aus p-Toluolsulfonatmethyl, p-Toluolsulfonatmethyl, Trifluormethansulfonsäure, Tosylsäure, Methylbromid, Methylchlorid, Schwefelsäure, Bromwasserstoffsäure, Bortrifluorid, Trihalogenobismutin, Bis-2-oxazoliniumsalz, N-Methyl-2-methyl-2-oxazoliniumtriflat und α-Methoxy-w-4-toluolsulfonat-poly(ethylenoxid), wobei der Initiator vorzugsweise Trifluorsäure ist.

13. Verfahren nach einem der Ansprüche 10 bis 12, wobei ein oder mehrere Abbruchmittel zur Beendigung der Polymerisation oder Copolymerisation verwendet werden, wobei die Abbruchmittel aus starken Nucleophilen, vorzugsweise HO⁻, HS⁻, RS⁻, I⁻, N₃⁻, Kaliumphthalimid, sekundären und tertiären Aminen, und schwachen bis mittelstarken Nucleophilen wie Wasser, Carboxylaten, Ammoniak und primären Aminen ausgewählt sind.

14. Verfahren nach einem der Ansprüche 9 bis 13, wobei ein oder mehrere Härtungsmittel irreversibel als End- und/oder Seitengruppen kovalent an das Polymer auf Polyoxazolinbasis gebunden sind; wobei das thermisch latente Härtungsmittel durch einen oder eine Kombination der folgenden Schritte hergestellt wird:
- Umsetzung von Poly(2-R-oxazolin-co-ethylenimin) mit einer oder mehreren Verbindungen, die eine Carbonylgruppe enthalten, und mit einer oder mehreren Verbindungen in Form von R₆-Y;
- Umsetzen von Polyethylenimin mit einer oder mehreren Verbindungen, die eine Carbonylgruppe enthalten, und einer oder mehreren Verbindungen in Form von R₆-Y und einer oder mehreren Verbindungen in Form von R₂-X; wobei
R₆ bezieht sich auf ein Mittel, das die Harzhärtungsreaktion entweder direkt oder nach dem Entschützungsschritt nach der Bindung von R₆-Y an das Polymer einleitet, wobei R₆ ausgewählt ist aus tertiären Aminen und protonierten und geschützten primären und sekundären Aminen, aliphatischen Aminen, aromatischen Aminen, cycloaliphatischen Aminen und heterocyclischen Aminen ausgewählt ist, wobei R6 vorzugsweise aus 4-Dimethylaminobuttersäure, 4-(Methylamino)buttersäurehydrochlorid, N-(tert-Butoxycarbonyl)-3-aminopropionsäure, 3-[(tert-Butoxycarbonyl)(methyl)amino]propansäure, 1H-Imidazol-1-y-essigsäure und 4-Imidazolessigsäurehydrochlorid ausgewählt ist.
Y bezieht sich auf eine Gruppe, die eine funktionelle Gruppe trägt, die mit einer sekundären Amingruppe reagieren kann, hier mit der sekundären Amingruppe des POZ-PEI, wobei Y ausgewählt ist aus Carbonsäuren, Acylhalogeniden und Anhydriden, vorzugsweise ist Y ausgewählt aus Bernsteinsäure, Terephthalsäure, 4-4'-Biphenyldicarbonsäure; 2-[2,4-Di(pentan-2-yl)phenoxy]acetylchlorid, Essigsäureanhydrid, Maleinsäureanhydrid, Phthalsäureanhydrid und Nadinsäuremethylanhydrid.
X ist eine funktionelle Gruppe zur Reaktion mit einer sekundären Amingruppe eines Poly(2-R-oxazolin-co-ethylenimins); vorzugsweise ausgewählt aus Epoxiden, Aldehyden, Säureanhydriden, (cyclischen) Carbonaten und Acrylaten.

15. Verfahren nach einem der Ansprüche 9 bis 13, wobei ein oder mehrere Härtungsmittel irreversibel als End- und/oder Seitengruppen kovalent an das Polymer auf Polyoxazolinbasis gebunden sind; wobei das thermisch latente Härtungsmittel durch Umsetzen des Polymers auf Polyoxazolinbasis, das eine funktionelle Seitengruppe aufweist, mit R₉-Z hergestellt wird, wobei die Seitengruppe eine Estergruppe oder eine Carbonsäuregruppe sein kann, Z die Gruppe ist, die mit der Seitenkette reagieren kann, und R₉ eine Gruppe ist, die die Härtungsreaktionen auslösen kann.

16. Verfahren nach einem der Ansprüche 9 bis 13, wobei ein oder mehrere Härtungsmittel kovalent an das Polymer auf Polyoxazolinbasis reversibel gebunden sind; wobei das thermisch latente Härtungsmittel durch Umsetzen von Poly(2-R-oxazolin-co-ethylenimin) oder Poly(2-R-co-2-R'-2-oxazolin-co-ethylenimin) mit einer oder mehreren Verbindungen mit einer funktionellen Isocyanatgruppe in der Form R₁₁-NCO hergestellt wird, wobei R₁₁ ausgewählt ist aus der Gruppe, die Alkylgruppen, aromatische Gruppen und Cycloalkane umfasst.

## Revendications

1. Agent de durcissement thermique latent comprenant un ou plusieurs polymères à base de polyoxazoline et un ou plusieurs agents de durcissement, **caractérisé en ce que** dans lequel les agents de durcissement sont :
(i) piégé physiquement dans une matrice du polymère à base de polyoxazoline, et/ou
(ii) lié de manière covalente au polymère à base de polyoxazoline de façon irréversible en tant que groupe latéral et/ou terminal, et/ou
(iii) lié de manière covalente au polymère à base de polyoxazoline de façon réversible.

2. Agent de durcissement thermique latent selon la revendication 1, dans lequel un ou plusieurs agents de durcissement sont choisis dans la liste constituée des amines aliphatiques, des amines aromatiques, des amines cycloaliphatiques, des polyamides, des polyamines, des dérivés de l'imidazole, des polymères mercaptans, des anhydrides, des phénols, des catalyseurs anioniques qui comprennent de préférence l'imidazole, des amines tertiaires et des catalyseurs cationiques qui comprennent de préférence le trifluorure de bore.

3. Agent de durcissement thermique latent selon l'une quelconque des revendications 1 ou 2, dans lequel ledit ou lesdits agents de durcissement sont physiquement piégés dans la matrice des polymères à base de polyoxazoline et lesdits polymères à base de polyoxazoline sont choisis dans la liste comprenant :
- homopolymères, copolymères aléatoires, copolymères alternés, copolymères à blocs et copolymères à gradient d'un ou de plusieurs monomères d'oxazoline ;
- copolymères aléatoires, copolymères alternés, copolymères à blocs et copolymères à gradient comprenant au moins une unité de répétition à base d'oxazoline ainsi que des unités de répétition portant des groupes autres que ladite unité de répétition à base d'oxazoline ;
- copolymères aléatoires, copolymères alternés, copolymères à blocs et copolymères à gradient comprenant une pluralité d'unités répétitives de poly(2-R-oxazoline-co-éthylèneimine) ;
ou un mélange de ceux-ci.

4. Agent de durcissement thermique latent selon l'une des revendications 1 ou 2, dans lequel un ou plusieurs agents de durcissement sont liés de manière covalente aux polymères à base de polyoxazoline de manière réversible et/ou irréversible en tant que chaîne terminale et/ou latérale, le polymère à base de polyoxazoline étant choisi parmi les polymères à base de polyoxazoline :
- homopolymères, copolymères aléatoires, copolymères alternés, copolymères à blocs et copolymères à gradient d'un ou de plusieurs monomères d'oxazoline ;
- copolymères aléatoires, copolymères alternés, copolymères à blocs et copolymères à gradient comprenant au moins une unité de répétition à base d'oxazoline ainsi que des unités de répétition portant des groupes autres que ladite unité de répétition à base d'oxazoline ;
- copolymères aléatoires, copolymères alternés, copolymères à blocs et copolymères à gradient comprenant une pluralité d'unités répétitives de poly(2-R-oxazoline-co-éthylèneimine) ;
ou un mélange de ceux-ci.

5. Mélange comprenant une résine matricielle thermodurcissable mélangée à un ou plusieurs agents de durcissement thermique latent selon l'une des revendications 1 à 4.

6. Mélange selon la revendication 5, dans lequel la résine matricielle thermodurcissable est une résine qui comprend un ou plusieurs groupes fonctionnels choisis parmi les époxydes, les isocyanates, les carbonates cycliques et les aldéhydes.

7. Mélange selon l'une des revendications 5 ou 6, dans lequel la résine matricielle thermodurcissable est une résine époxy, de préférence un diglycidyl éther de bisphénol A.

8. Système de résine monocomposant comprenant le mélange selon l'une des revendications 5 à 7.

9. Méthode de préparation d'un agent de durcissement thermique latent, dans laquelle la méthode comprend une ou une combinaison des étapes suivantes :
a. préparation d'une solution comprenant un ou plusieurs polymères à base de polyoxazoline, un ou plusieurs agents de durcissement et un ou plusieurs solvants, puis évaporation dudit ou desdits solvants pour obtenir une matrice de polyoxazoline dans laquelle un ou plusieurs agents de durcissement sont physiquement piégés ;
b. préparation d'une matrice d'un ou plusieurs polymères à base de polyoxazoline , dans laquelle un ou plusieurs agents de durcissement sont liés de manière covalente au polymère à base de polyoxazoline de façon irréversible ; ou
c. préparation d'une matrice d'un ou plusieurs polymères à base de polyoxazoline, dans laquelle un ou plusieurs agents de durcissement sont liés de manière covalente au polymère à base de polyoxazoline de façon réversible.

10. Méthode selon la revendication 9, dans laquelle un ou plusieurs polymères à base de polyoxazoline mentionnés à l'étape (a) sont préparés par les sous-étapes suivantes :
a1. polymérisation cationique par ouverture de cycle d'un ou de plusieurs monomères d'oxazoline ou post-modification chimique de polyéthylèneimine linéaire pour obtenir un ou plusieurs homopolymères de polyoxazoline ; et/ou
a2. hydrolyse partielle des homopolymères de polyoxazoline ou modification chimique partielle de la polyéthylèneimine pour obtenir un ou plusieurs poly(2-oxazoline-co-éthylèneimine) ; et/ou
a3. copolymérisation d'un ou de plusieurs monomères d'oxazoline ou post-modification chimique de la poly(2-R-oxazoline-co-éthylèneimine) pour obtenir un ou plusieurs copolymères.

11. Procédé selon la revendication 10, dans lequel un ou plusieurs initiateurs sont utilisés pour initier la polymérisation ou la copolymérisation, lesdits initiateurs étant choisis parmi les sulfonates d'alkyle, les tosylates d'alkyle, les acides, les halogénures d'alkyle, les acides forts, les acides de Lewis, les sels d'oxazolinium et les macro-initiateurs.

12. Procédé selon la revendication 11, dans lequel lesdits initiateurs sont choisis parmi le p-toluènesulfonate de méthyle, le p-toluènesulfonate de méthyle, l'acide trifluorométhanesulfonique, l'acide tosylique, le bromure de méthyle, le chlorure de méthyle, l'acide sulfurique, acide bromhydrique, trifluorure de bore, trihalogénobismuthine, sel de bis-2-oxazolinium, triflate de N-méthyl-2-méthyl-2-oxazolinium et α-méthoxy-w-4-toluènesulfonate-poly(oxyde d'éthylène) et, de préférence, ledit initiateur est l'acide triflique.

13. Méthode selon l'une des revendications 10 à 12, dans laquelle un ou plusieurs agents de terminaison sont utilisés pour terminer la polymérisation ou la copolymérisation, lesdits agents de terminaison étant choisis parmi les nucléophiles forts, de préférence HO⁻, HS⁻, RS⁻, I⁻, N₃⁻, le phtalimide de potassium, les amines secondaires et tertiaires, et les nucléophiles faibles à modérément tels que l'eau, les carboxylates, l'ammoniaque et les amines primaires.

14. Méthode selon l'une des revendications 9 à 13, dans laquelle un ou plusieurs agents de durcissement sont liés de manière covalente au polymère à base de polyoxazoline de manière irréversible en tant que groupes terminaux et/ou latéraux ; l'agent de durcissement thermique latent est préparé par l'une des étapes suivantes ou par une combinaison de ces étapes :
- réaction de la poly(2-R-oxazoline-co-éthylèneimine) avec un ou plusieurs composés comprenant un groupe carbonyle et avec un ou plusieurs composés sous forme de R₆-Y ;
- réaction de la polyéthylèneimine avec un ou plusieurs composés comprenant un groupe carbonyle, un ou plusieurs composés sous la forme R₆-Y, et un ou plusieurs composés sous la forme R₂-X ; dans laquelle
R₆ désigne un agent qui amorce la réaction de durcissement de la résine soit directement, soit après l'étape de déprotection qui suit la fixation de R₆-Y au polymère, dans lequel R₆ est choisi parmi les amines tertiaires et les amines primaires et secondaires protonées et protégées, les amines aliphatiques, les amines aromatiques, les amines cycloaliphatiques et les amines hétérocycliques, De préférence, R6 est choisi parmi l'acide 4-diméthylamino butyrique, le chlorhydrate d'acide 4-(méthylamino) butyrique, l'acide N-(tert-butoxycarbonyl)-3-aminopropionique, l'acide 3-[(tert-butoxycarbonyl)(méthyl)amino]propanoïque, l'acide 1H-imidazol-1-ylacétique et le chlorhydrate d'acide 4-imidazoleacétique.
Y désigne un groupe portant un groupe fonctionnel pouvant réagir avec un groupe amine secondaire, ici avec le groupe amine secondaire du POZ-PEI, dans lequel Y est choisi parmi les acides carboxyliques, les halogénures d'acyle et les anhydrides, de préférence Y est choisi parmi l'acide succinique, l'acide téréphtalique, l'acide 4-4'-biphényldicarboxylique ; chlorure de 2-[2,4-di(pentan-2-yl)phénoxy]acétyle ; anhydride acétique, anhydride maléique, anhydride phtalique et anhydride méthylique nadique.
X est un groupe fonctionnel destiné à réagir avec un groupe amine secondaire d'une poly(2-R-oxazoline-co-éthylèneimine) ; il est de préférence choisi parmi les époxydes, les aldéhydes, les anhydrides d'acide, les carbonates (cycliques) et les acrylates.

15. Procédé selon l'une des revendications 9 à 13, dans lequel un ou plusieurs agents de durcissement sont liés de manière covalente au polymère à base de polyoxazoline de manière irréversible en tant que groupes terminaux et/ou latéraux ; l'agent de durcissement thermique latent est préparé en faisant réagir le polymère à base de polyoxazoline ayant un groupe latéral fonctionnel avec R₉-Z, dans lequel le groupe latéral peut être un groupe ester ou un groupe acide carboxylique, Z est le groupe capable de réagir avec la chaîne latérale et R₉ est un groupe capable d'initier les réactions de durcissement.

16. Procédé selon l'une des revendications 9 à 13, dans lequel un ou plusieurs agents de durcissement sont liés de manière covalente au polymère à base de polyoxazoline de façon réversible ; l'agent de durcissement thermique latent est préparé en faisant réagir la poly(2-R-oxazoline-co-éthylèneimine) ou la poly(2-R-co-2-R'-2-oxazoline-co-éthylèneimine) avec un ou plusieurs composés ayant un groupe fonctionnel isocyanate sous la forme R₁₁-NCO dans lequel R₁₁ est choisi dans le groupe comprenant les groupes alkyles, les groupes aromatiques et les cycloalcanes.
